# EUROPEAN PATENT APPLICATION

(11) **EP 0 767 076 A1**
(43) Date of publication of application: **09.04.1997**
(21) Application number: 95810623.9
(22) Date of filing: 04.10.1995
(51) Int. Cl.: B42D 3/12, G11B 33/04

(54) **Combined book and prerecorded disk package**

(71) Applicant: Placing, James, 3818 Grindelwald (CH)
(72) Inventor: Placing, James, 3818 Grindelwald (CH)

(57) **Abstract**

In a combined book and prerecorded disk package, the book (1) has a reinforced, tear-resistant binding (2) in which a pocket (3) irremovably holding at least one disk (4) is defined. At least one edge of the pocket (3) is formed by a part of an outer edge (5) of the binding (2), which outer edge (5) is suitable to be cut in order to provide access to the disk (4). The incorporation of the disk (4) into the binding (2) of the book (1) itself prevents theft and provides a very compact package.

## Description

The invention relates to a combined book and prerecorded disk package. Such a package is known from US-A-4 640 413, which relates to a package of the type where a prerecorded computer disk and an instruction manual are sold in a cardboard folder. The folder is formed from a unitary blank and has a front segment with an open pocket for insertion of the cover of the instruction book and a rear segment with a closed pocket for the computer disk.

Although the disk cannot easily be removed from the closed pocket, the folder as a whole is readily removable from the book it holds and can thus be stolen. Moreover, the folder is made of lightweight cardboard which can easily be destroyed in order to remove the disk. Furthermore, once the user has opened the pocket, access to the disk remains cumbersome.

Other known packages include slip case packages, which allow the book and the disk to be separated from one another easily.

It is an object of the present invention to provide a compact combined book and prerecorded disk package wherein the book and the disk cannot quickly be separated from one another and, once the package has initially been opened, the disk is readily accessible.

In accordance with the invention, this object is achieved by the features of the characterizing portion of claim 1. By incorporating the disk(s) irremovably into the binding of the book itself, not only is inconspicuous removal and theft of the disk(s) rendered highly difficult, but an extremely compact package is also provided. The reinforced, tear-resistant binding precludes removal as well as destruction of the binding. Once the pocket is opened by cutting an outer edge of the binding, the disk becomes freely accessible.

The foregoing and other objects and features of the invention will now be described by way of example and with reference to the accompanying drawings in which:
- Fig. 1: is a schematical perspective front view of a package according to the invention;
- Fig. 2: is a side view of the package;
- Fig. 3: is a cross section of the package;
- Fig. 4: is a schematical perspective front view of the package with a disk withdrawn from the opened pocket; and
- Fig. 5: is the view of Fig. 4 with the disk replaced in the pocket for storage.

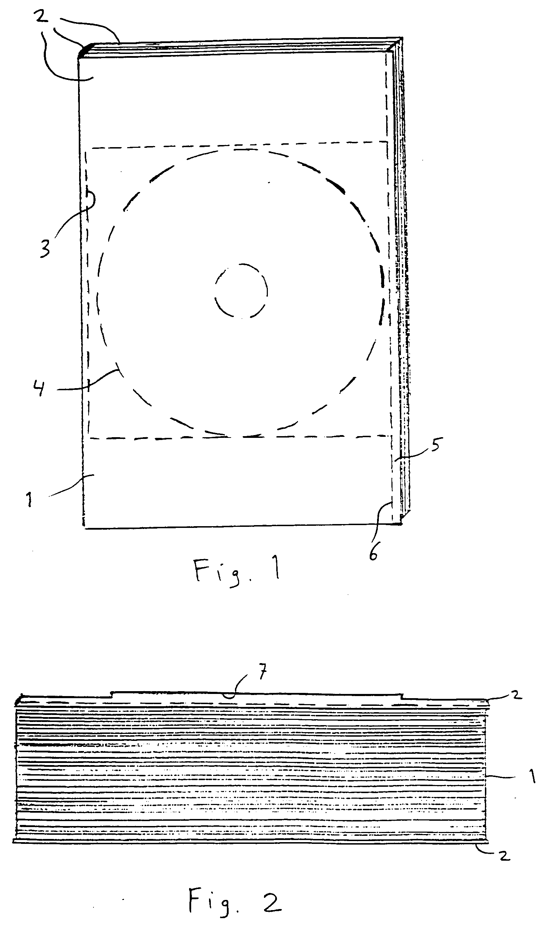

Figure 1 shows a schematical perspective front view of a package according to the invention. Book 1 has a reinforced and tear-resistant binding 2 in which a pocket 3 is defined. Inside the pocket 3, which may have a window or a view opening or may be completely closed, a disk 4 is irremovably held. The disk 4 cannot be removed from the pocket 3 without destroying the latter. One edge of the pocket 3 is formed by a part of an outer edge 5 of the binding 2. In order to provide access to the disk 4, the outer edge 5 is suitable to be cut with scissors or other suitable cutting instruments. A marking line 6, for example a print-dotted line, indicates where the outer edge 5 is to be cut in order to provide access to the disk 4. The outer edge 5 is formed as a protrusion of the book cover, so that the front cover and the back cover have the same size after cutting the outer edge 5.

In Figure 2 an opening side view of the package is shown. A recess 7 is provided in the binding 2 for receiving the disk 4 (not shown). The dashed line indicates that the upper part of the binding 2 consists of two partly joined layers.

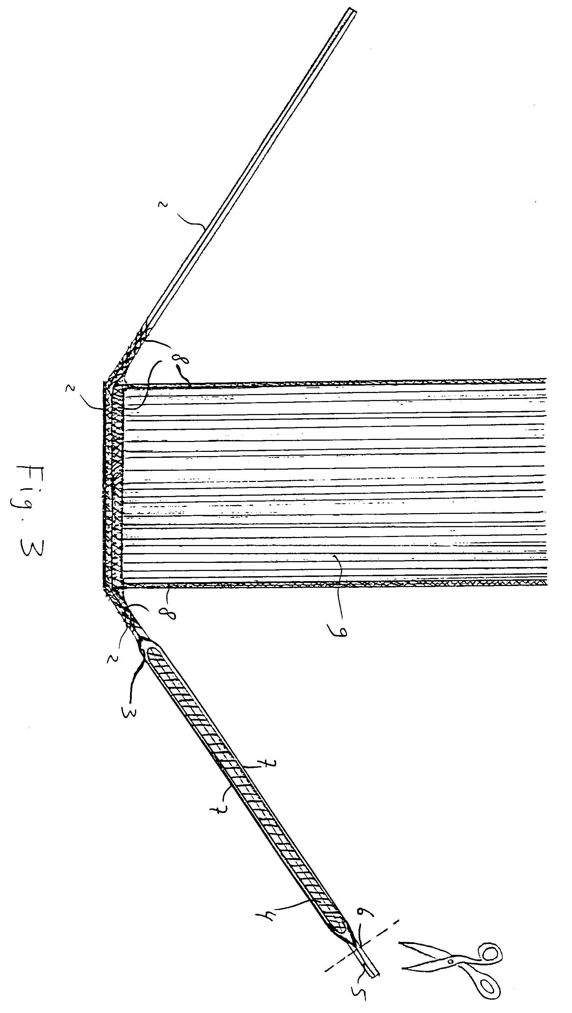

Figure 3 shows a cross section of the package. The binding 2, which comprises a front cover, a spine and a back cover, consists of a plurality of laminated, bonded coatings 8 of a nontoxic plastic and/or cardboard. Thus, the reinforced binding 2 is flexible and tear-resistant. The front cover (and/or the back cover) is at least partly double-layered. During manufacture of the binding, the recess 7 for (at least one) disk 4 is embossed in at least one reinforced, tear-resistant layer of the front cover. Then the disk 4 is inserted in the recess 7 and the layers are partly joined together by means of vulcanised or die sealing and/or a suitable adhesive so as to form the pocket 3 and seal the disk 4 inside the pocket 3. The inner book 9 is mounted on the binding 2 by means of lamination with a suitable, flexible adhesive, thus reinforcing the bond between the printed text 9 and the binding 2.

The pocket 3, which is formed by recesses 7 in each of the two layers constituting the front cover of the book, is closed and completely encapsulates the disk 4. At least one edge of the pocket 3 is formed by a part of the (horizontal or vertical) outer edge 5 of the book cover. This outer edge 5 is tear-resistant and suitable to be cut off along the marking line 6 in order to open the pocket 3. Disk 4 can then be easily pulled out of the binding 2.

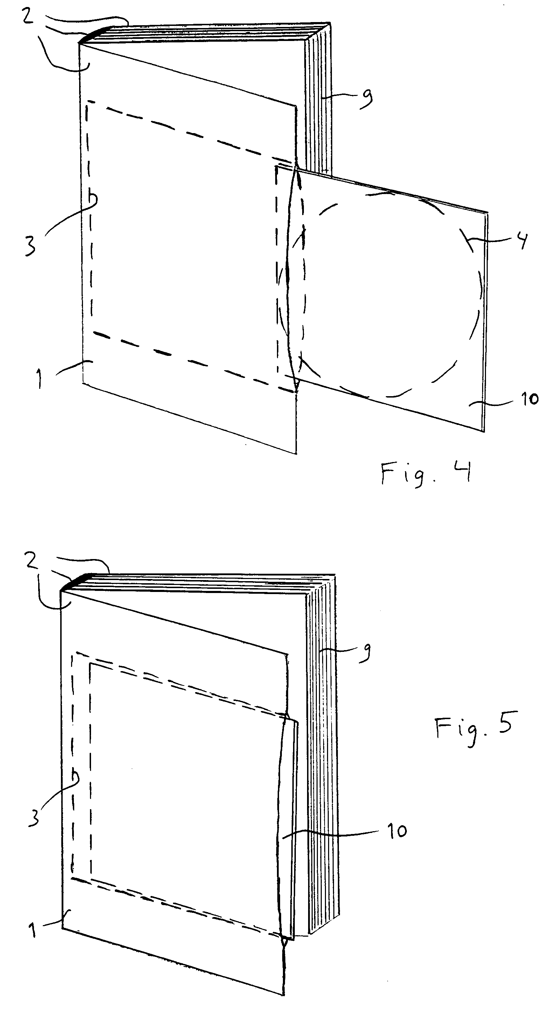

In Figure 4 a schematical perspective front view of the package with a disk 4 withdrawn from the opened pocket 3 is shown. Each disk 4 in the pocket 3 is provided with an individual protective cover 10. In this way, the disk(s) 4 are doubly protected.

Figure 5 shows the view of Figure 4 with the disk 4 replaced in the pocket 3 for storage. After cutting the outer edge 5 of the binding 2, the pocket 3 is suitable for the storage of the disk(s) 4. When not in use, the disk(s) 4 can be replaced in the pocket 3. Damage to the printed text 9 is minimised by the replacement of the disk(s) 4 in the package. The pocket 3 may have fastening means (not shown) for opening and closing it after the outer edge 5 of the binding 2 has been cut off. For example, a velcro fastener can be provided on the inside of the opening edge of the pocket 3. Clip, button or zip fasteners are also possible. In this way, once the outer edge 5 of the binding 2 is cut off by the user, the pocket 3 may be reopened and reclosed each time a disk 4 is needed, so the disk(s) 4 are even better protected.

The package may be utilised for carrying and presenting prerecorded disks 4, for example Compact Discs, CD-ROM's, floppy disks or diskettes, having music, instructions, language courses, dramatic dialogue, integrated learning systems, computer programmes or the like recorded on them in relation to the text of the accompanying book 1. Exterior faces of the package may be provided with printed indicia relating to the contents and titles of the book 1 and the disk 4.

The sealed pocket 3 inside the double-layered, reinforced, flexible binding 2 results in a compact, secure and attractive combination package. The disk 4 can only be accessed by careful cutting of the outer edge 5. Removing the disk(s) 4 inconspicuously in a retail store environment is thus very difficult. Attempts to remove the entire binding from the inner book 9 are inhibited by the reinforced, tear-resistant binding 2. Once the pocket 3 is opened by cutting the outer edge 5 of the binding 2, the disk 4 becomes readily accessible, as the package has no further obstacles preventing the disk 4 from being pulled out of the pocket 3.

## Claims

1. Combined book and prerecorded disk package **characterized in that** the book (1) comprises a reinforced, tear-resistant binding (2) in which a pocket (3) irremovably holding at least one disk (4) is provided, at least one edge of the pocket (3) being formed by a part of an outer edge (5) of the binding (2), which outer edge (5) is suitable to be cut in order to provide access to the at least one disk (4).

2. Package according to claim 1 **characterized in that** the binding (2) comprises a book cover which is at least partly double-layered, the layers being partly joined together so as to form the pocket (3).

3. Package according to claim 2 **characterized in that** at least one of the layers has a recess (7) for receiving the at least one disk (4).

4. Package according to claim 2 or 3 **characterized in that** the pocket (3) is closed and completely encapsulates the at least one disk (4), at least one edge of the pocket (3) being formed by a part of a horizontal or vertical outer edge (5) of the book cover, which outer edge (5) is tear-resistant and suitable to be cut off in order to open the pocket (3).

5. Package according to claim 4 **characterized in that** the outer edge (5) is formed as a protrusion of the book cover (2).

6. Package according to any one of claims 1 to 5 **characterized in that** the outer edge (5) is provided with a marking line (6) which indicates where it is to be cut in order to provide access to the at least one disk (4).

7. Package according to any one of claims 1 to 6 **characterized in that** each disk (4) in the pocket (3) is provided with an individual protective cover (10).

8. Package according to any one of claims 1 to 7 **characterized in that** the pocket (3), after cutting the outer edge (5) of the binding (2), is suitable for the storage of the at least one disk.

9. Package according to any one of claims 1 to 8 **characterized in that** the pocket (3) is provided with fastening means for opening and closing the pocket (3) after the outer edge (5) of the binding (2) has been cut off.

10. Package according to any one of claims 1 to 9 **characterized in that** the binding (2) comprises a plurality of laminated, bonded coatings (8) of a nontoxic plastic and/or cardboard.

11. Method for manufacturing a package according to any one of claims 1 to 10 **characterized by** the steps of embossing a recess (7) for the at least one disk (4) in at least one reinforced, tear-resistant layer of the binding (2), inserting the at least one disk (4) in the recess (7), joining the layers so as to seal the at least one disk (4) inside the pocket (3), and mounting the inner book (9) on the binding (2) by means of an adhesive.
